# EUROPEAN PATENT SPECIFICATION

(11) **EP 1 248 721 B1**
(45) Date of publication and mention of the grant of the patent: **30.07.2003**
(21) Application number: 01942605.5
(22) Date of filing: 18.01.2001
(51) Int. Cl.: B62D 55/112

(54) **POSITIVELY DRIVEN ELASTROMERIC TRACK AND SUSPENSION SYSTEM FOR AN AGRICULTURAL TRACTOR**
ANGETRIEBENE GUMMIRAUPE MIT AUFHÄNGUNGSVORRICHTUNG FÜR EINE LANDWIRTSCHAFTLICHE MASCHINE
SYSTEME DE TRAIN CHENILLE EN ELASTOMERE A ENTRAINEMENT A FORCE ET DE SUSPENSION POUR TRACTEUR AGRICOLE

(30) Priority: 18.01.2000 US 176607 P
(43) Date of publication of application: 16.10.2002
(73) Proprietor: New Holland Canada, Ltd., Saskatoon, Saskatchewan S7K 3S5 (CA)
(72) Inventor: NAGORCKA, James, A., Hamilton, VIC 3300 (AU); ROGERS, Murray, Hamilton, VIC 3300 (AU)
(74) Representative: Vandenbroucke, Alberic
(86) International application number: CA0100034
(87) International publication number: WO01053143

(56) References cited:
- US-A- 3 841 424
- US-A- 4 097 093
- US-A- 5 279 378
- US-A- 5 316 381

## Description

### BACKGROUND OF INVENTION

### Field of Art:

This invention relates to the improvement of an agricultural tractor. More specifically it relates to a positively driven elastomeric track and suspension system for an agricultural tractor.

### Description of Prior Art:

Agricultural tractors have been used for a variety of farming operations for decades. Tractors have become more versatile and are now being used for a greater number of agricultural tasks. In order to minimize compaction to the soil, treaded tracks are often used to support an agricultural tractor. The tracks offer the additional bonus that a tractor can be used in wet field conditions as opposed to its wheeled counter-part. However, the use of treaded tractors creates new difficulties. Chief among these problems is maintaining track alignment and proper suspension for the tracked tractor.

The prior art illustrates these and additional difficulties. U.S. Patent No. 5,279,378 to Caterpillar Inc or 'Cat' describes a heavy-duty belted farm tractor used in the Cat Challenger ™ tractor. John Deere also manufactures the Deere 9000T ™ that is a treaded tractor. Both the Deere 9000T ™ and Cat Challenger ™ tractors have differential steering which requires extra engine power to turn because the tractor ground speed is maintained and therefore the same pulling power is also required. The end result is that the operator has to reduce engine load to turn either by downshifting to a lower gear or raising the implement to reduce draft load. Case corp. manufactures a treaded tractor known as the Case-IH Quad Track ™ tractor which has articulated steering. However, maneuverability thereof is severely restricted to a large turn radius of 5.94 m (19'6").

Consequently, the need exists for a positively driven elastomeric track and suspension system for an agricultural tractor.

In US-A-5.316.381, a track suspension system is shown comprising a drive wheel, two idler wheels and intermediate support rollers. The idler wheels and support rollers are mounted onto respectively front and rear pivot arms and intermediate arms which are pivotally attached to a rigid frame plate. Each of said pivot arms comprises a separate hydraulic suspension cylinder for individually controlling movement of the arms. The cylinders with the associated anchorage areas require a substantive space and render the arrangement complex and expensive.

### OBJECTS OF THE INVENTION

It is an object of the present invention to provide a positively driven elastomeric track and suspension system for an agricultural tractor.

It is a further object of the present invention to provide a track and suspension system for a variety of tractors by means of a plurality of air springs.

It is a further object of the present invention to provide a track and suspension system capable of accommodating ground bumps and bridging ground hollows.

It is a further object of the present invention to provide a track and suspension system having two mid track frames that may move independently and a bridge beam that allows the mid track frames to have an upward vertical movement, but preventing a downward vertical movement.

### SUMMARY OF THE INVENTION

The invention overcomes the deficiencies of the prior art. The invention relates to a track and suspension system for an agricultural tractor. The invention consists of an endless rubber or elastomeric track encircling a drive wheel, front and a rear idler wheels and two pairs of mid roller wheels and a supporting undercarriage. The undercarriage has front and rear suspension arms pivotally mounted to the front and rear axle, respectively. Attached to the front suspension arm is a front idler wheel, air spring, and front aligning member and track tension cylinder. Attached to the rear suspension arm is the rear idler wheel and another air spring. A pair of front mid track rollers is supported by a front mid track frame that is pivotally attached to the front aligning member. A pair of rear mid track rollers is supported by a rear mid track frame that is pivotally attached to the rear suspension arm. A bridge beam is pivotally attached to the front mid track frame. The bridge beam is pivotally connected to the rear mid track frame via a sliding shaft member. The sliding shaft member is pivotally connected to the rear mid track frame and engaged with the bridge below.

### BRIEF DESCRIPTION OF THE DRAWINGS

The advantages of this invention will be apparent upon consideration of the following detailed disclosure of the invention, especially when taken in conjunction with the accompanying drawings wherein:
Figure 1 is a general view of an agricultural tractor.
Figure 2 is a side view of the positively driven elastomeric track and suspension system.

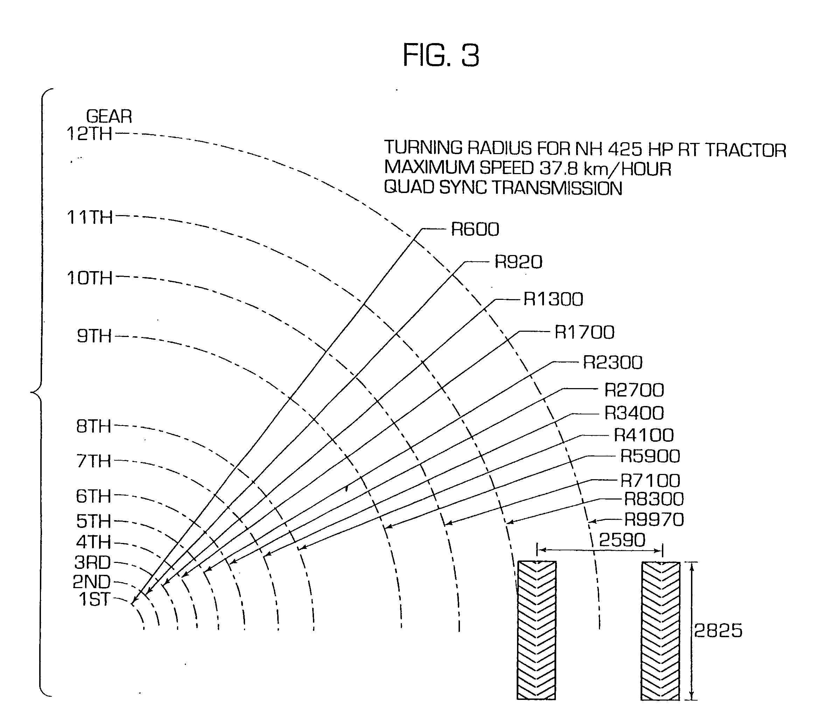

Figure 3 is a graph illustrating the turning radius of a tractor in gears 1 through 12.

### DETAILED DESCRIPTION OF THE INVENTION

Referring to the drawings, it is possible to observe the major elements and general operation of the present invention. Left and right references are used as a matter of convenience and are determined by standing at the rear of the tractor and facing the forward end in the normal direction of travel. Likewise, forward and rearward are determined by normal direction of travel of the tractor. Upward or downward orientations are relative to the ground or operating surface. Horizontal or vertical planes are also relative to ground.

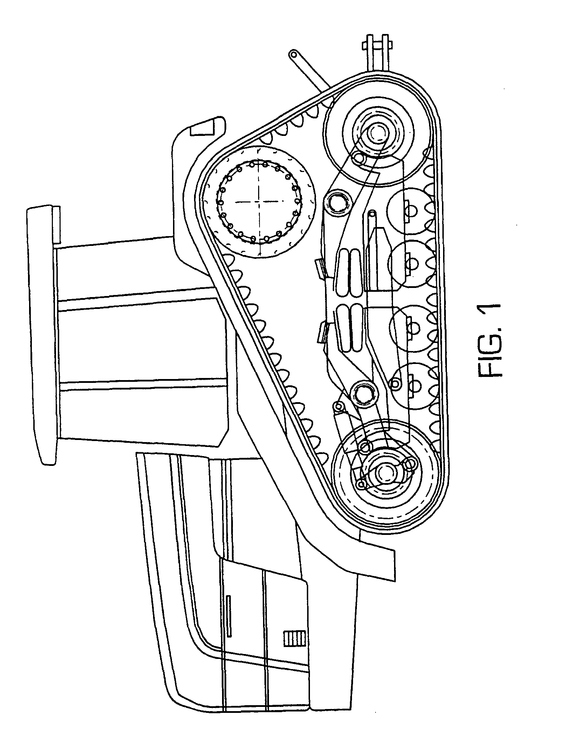

Figure 1 illustrates a conventional agricultural tractor containing the present invention. The farm tractor has a pair of elastromeric tracks (only one shown) for movement and the support of the remainder of the tractor. There is an engine compartment for supplying power. An operator's platform is reached by a series of platform steps and contains an operator's chair (not shown). From the operator's chair, the operator can observe and control a variety of farming operations. A steering wheel supported by a steering column is located in front of the operator's chair. There are a set of left-hand controls and right-hand controls for controlling the hitch, power-take-off (PTO) (not shown) and various other agricultural systems. The transmission housing contains the transmission (not shown) which provide power to the tracks. The present invention focuses on the track and suspension system of the tractor

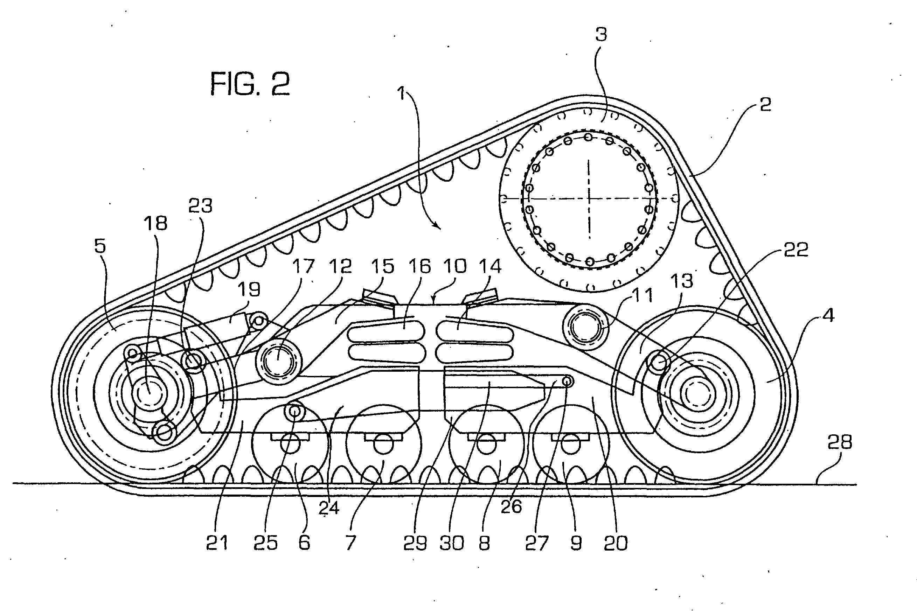

Figure 2 illustrates the tractor track and frame 1, consisting of an endless rubber track 2, drive wheel 3, front and rear idler wheels 4 and 5, mid roller wheels 6, 7, 8 and 9, and supporting undercarriage components 10, connected to the tractor chassis by axle beams 11 and 12. Undercarriage components consist of a rear suspension arm 13 rotatably mounted to axle 11 and attached to arm 13 is idler wheel 4 and air spring 14. A front suspension arm 15 is rotatably mounted to front axle beam 12. Front suspension arm 15 has attached to it air spring 16, front aligning member 17, front axle 18, front wheel 5 and track tensioning cylinder 19. Mid track rollers 8 and 9 are supported by rear mid track frame 20 which is pivotally mounted to rear arm 13 by pin 22 and supported by air spring 14. Mid track rollers 6 and 7 are supported by front mid track frame 21 which is pivotally mounted to front aligning member 17 by pin 23 and supported by air spring 16. Bridge beam 24 is pivotally mounted to front mid track frame 21 by means of pin 25. Attached to bridge beam 24 is sliding shaft member 26 which is pivotally connected to rear mid track frame 20 by means of pin 27.

The novelty and features of this track suspension are the two mid track frames 20 and 21 which can move independently and vertically by pivoting around pins 22 and 23 and which support the vertical machine load by way of the air springs 14 and 16. Bridge beam 24 and its attached sliding shaft member 26 are a feature which only allows mid track frames 20 and 21 to move above plane 28 but does not allow downward vertical movement. The sliding shaft member 26 allows for fore/aft movement between mid track frames 20 and 21 when vertical movement is required. Also there is fore/aft movement of the mid track frames as the front and rear suspension arms 13 and 15 pivot around axle beams 11 and 12. Bumper stops 29 and 30 are placed between front mid track frame 21 and bridge beam 24 and between rear mid track frame 20 and sliding shaft member 26. The bumper stops cushion the impact between the parts and because of the sliding movement of the shaft member 26 there is no sliding or wearing of the bumper stops as the tow track frames move relative to each other. The two mid track frames accommodate "bumps" on the ground surface but bridge the "hollows" therefore allowing smoother ride and greater ground surface compliance without the fore/aft pitching.

The track system features a unique suspension system that gives a ride far superior to any other agricultural track machine, because no other machine has built-in suspension of this kind. The feature of the suspension is its ability to ride over the hollows and holes but compensate for the height of humps and bumps. The tractor literally rides on a cushion of air supported by four air springs. The suspension is gentle on the tractor and gentle on the operator. A much more comfortable ride is achieved at higher speeds than a tractor without suspension.

The track system front and rear suspension arms are positioned inside the track so that they are track tension and track load neutral. In other words, draught load and track tension does not effect suspension movement. Also visa-versa, suspension travel does not affect track tension.

The track system has built-in anti-dive that helps retain the tractor attitude during medium to heavy braking.

The suspension helps to further reduce soil compaction by reducing the impact of each track frame idler and roller wheel on the soil surface.

Extra tractive effort is gained on uneven ground due to the suspension movement keeping each track frame ground compliant.

The track system incorporates a twin hydromechanical steering system that allows the tractor to make full power turns under load without downshifting and/or engine lugging and stalling. Because every skid steer machine requires power to turn, the steering power required is always added to the pulling power requirement when turning under load. Because the track system steering system reduces speed and therefore draft load in a turn, the total power required of the engine when turning is the same as straight ahead, or even reduced.

The track system steering automatically reduces tractor speed when turning. This is ideal for end of row turns when using mounted implements and saves wear and tear when turning with wide drawbar implements. John Deere and Cat tractors require constant downshifting and up shifting to achieve the same result.

Because of the outside track speed is maintained and the tractor speed is reduced on the track system when turning, it is less likely that the outside track will "spin-out" or loose traction. With the Deere and Cat tractor differential steering the outside track increases its speed when turning. Because the outer track is also required to pull a higher draft load at an increased speed there is a much greater chance of track "spin-out".

Steps that allow the operator access to the cabin are placed over the center of the left-hand track and can be easily moved in and out depending on tread spacing.

The track system tractor would be equipped with an air compressor and supply tank so that the operator is able to select optimum air pressure for the suspension air springs. A quick release air outlet is located at the rear of the tractor. This can also be used to clean remote outlets.

While the figure illustrates a large four-wheel drive tractor, the track and suspension system can be used on any land vehicle including smaller tractors; industrial tractors and skid steer loaders as well as harvesters.

## Claims

1. A positively driven elastomeric track and suspension system (1) for a land vehicle comprising:
- an endless rubber track (2) encircling a drive wheel (3), a front idler wheel (5) and rear idler wheel (4);
- a rear axle (11) and a front axle (12) supporting the vehicle;
- a supporting undercarriage structure (10) pivotally attached to the rear axle (11) and the front axle (12); the structure (10) comprising :
- a rear suspension arm (13) pivotally coupled to the rear axle (11) and having the rear idler wheel (4) rotationally attached at one end thereof;
- a front suspension arm (15) pivotally coupled to the front axle (12) and having the front idler wheel (5) rotationally attached at one end thereof; and
**characterized in that** said structure (10) further comprises :
- a rear mid track frame (20) supporting roller wheels (8, 9) and being pivotally attached at one end to the rear suspension arm (13);
- a front mid track frame (21) supporting roller wheels (6, 7) and being pivotally attached at one end to the front suspension arm (15); and
- first and second air springs (16, 14) attached respectively to the front and rear suspension arms (15, 13) at a distal end thereof opposite to the position of the respective front an rear idler wheels (5,4); said air springs (16, 14) respectively engaging said front and rear mid track frames (21, 20) at another end thereof.

2. A track and suspension system according to claim 1, **characterized in that** said front and rear suspension arms (15, 13) have a bell-crank shape, respectively supporting an idler wheel (5, 4) at one distal end and an air spring (16, 14) at another distal end.

3. A track and suspension system according to claim 1 or 2, **characterized in that** :
- said front mid track frame (21) is connected to the front suspension arm (15) by a pivot (23) located inbetween said front axle (12) and the front idler wheel (5); and
- said rear mid track frame (20) is connected to the rear suspension arm (13) by a pivot (22) located inbetween said rear axle (11) and the rear idler wheel (4).

4. A track and suspension system according to any of the preceding claims, **characterized in that** said supporting undercarriage structure (10) further comprises :
- a bridge beam (24) pivotally connected to the front mid track frame (21); and
- a sliding shaft member (26) attached to the bridge beam (24) and pivotally connected to the rear mid track frame (20).

5. A track and suspension system according to any of the preceding claims, **characterized in that** a track tensioning cylinder (19) is attached to the front suspension arm (15).

6. A track and suspension system according to claim 4, **characterized in that** the supporting undercarriage structure (10) further comprises a first bumper stop (29) positioned between the front mid track frame (21) and the bridge beam (24) and a second bumper stop (30) positioned between the rear mid track frame (20) and the sliding shaft member (26), wherein the position of the bumper stops (29, 30) allows upward vertical movement of the mid track frames (21, 20) but not downward vertical movement.

7. A track and suspension system according to any of the preceding claims, **characterized in that** said vehicle has an air compressor and a supply tank for supplying air pressure to the air springs (14, 16).

8. A track and suspension system according to any of the preceding claims, **characterized in that** the drive wheel (3) is positioned above the front and rear idler wheels (5, 4).

## Patentansprüche

1. Direkt angetriebenes Elastomer-Laufketten- und Aufhängungssystem (1) für ein Landfahrzeug, mit:
- einer endlosen Gummi-Laufkette (2), die ein Antriebsrad (3), ein vorderes Laufrad (5) und ein hinteres Laufrad (4) umgibt;
- eine Hinterachse (11) und eine Vorderachse (12), die das Fahrzeug abstützen;
- eine Abstütz-Fahrgestell-Struktur (10), die schwenkbar an der Hinterachse (11) und der Vorderachse (12) befestigt ist, wobei die Struktur (10) folgendes umfaßt:
- einen hinteren Aufhängungsarm (13), der schwenkbar mit der hinteren Achse (11) gekoppelt ist und an dessen einem Ende das hintere Laufrad (4) drehbar angebracht ist;
- einen vorderen Aufhängungsarm (15), der schwenkbar mit der Vorderachse (12) gekoppelt ist und an dessen einem Ende das vordere Laufrad (5) drehbar befestigt ist; und
- **dadurch gekennzeichnet, daß** die Struktur weiterhin folgendes umfaßt:
- einen hinteren mittleren Lauf ketten rahmen (20), der Radrollen (8, 9) trägt und schwenkbar an einem Ende an dem hinteren Aufhängungsarm (13) angebracht ist;
- einen vorderen mittleren Laufkettenrahmen (21), der Radrollen (6, 7) trägt und schwenkbar an einem Ende an dem vorderen Aufhängungsarm (15) angebracht ist; und
- erste und zweite Luftfedern (16, 14), die jeweils an den vorderen und hinteren Aufhängungsarmen (15, 13) an deren äußeren Ende gegenüberliegend zu der Position der jeweiligen vorderen und hinteren Laufräder (5, 4) angebracht sind; wobei die Luftfedern (16, 14) jeweils mit den vorderen und hinteren mittleren Laufkettenrahmen (21, 20) an einem anderen Ende hiervon in Eingriff stehen.

2. Laufketten- und Aufhängungssystem nach Anspruch 1, **dadurch gekennzeichnet, daß** die vorderen und hinteren Aufhängungsarme (15, 13) eine Winkelhebelform aufweisen und jeweils ein Laufrad (5, 4) an einem äußeren Ende und eine Luftfeder (16, 14) an dem anderen äußeren Ende tragen.

3. Laufketten- und Aufhängungssystem nach Anspruch 1 oder 2, **dadurch gekennzeichnet, daß**:
- der vordere mittlere Laufkettenrahmen (21) mit dem vorderen Aufhängungsarm (15) über einen Schwenkzapfen (23) verbunden ist, der zwischen der Vorderachse (12) und dem vorderen Laufrad (5) liegt; und
- der hintere mittlere Laufkettenrahmen (20) mit dem hinteren Aufhängungsarm (13) über einen Schwenkzapfen (22) verbunden ist, der zwischen der Hinterachse (11) und dem hinteren Laufrad (4) liegt.

4. Laufketten- und Aufhängungssystem nach einem der vorhergehenden Ansprüche, **dadurch gekennzeichnet, daß** die Stütz-Fahrgestell-Struktur (10) weiterhin folgendes umfaßt:
- einen Brückenträger (24), der schwenkbar mit dem vorderen und mittleren Laufkettenrahmen (21) verbunden ist; und
- ein Gleitwellenbauteil (26), das an dem Brückenträger (24) angebracht und schwenkbar mit dem hinteren mittleren Laufkettenrahmen (20) verbunden ist.

5. Laufketten- und Aufhängungssystem nach einem der vorhergehenden Ansprüche, **dadurch gekennzeichnet, daß** ein Laufketten-Spannzylinder (19) an dem vorderen Aufhängungsarm (15) angebracht ist.

6. Laufketten- und Aufhängungssystem nach Anspruch 4, **dadurch gekennzeichnet, daß** die Stütz-Fahrgestell-Struktur (10) weiterhin einen ersten Pufferanschlag (29), der zwischen dem vorderen mittleren Laufkettenrahmen (21) und dem Brückenträger (24) angeordnet ist, und einen zweiten Pufferanschlag (30) umfaßt, der zwischen dem hinteren mittleren Laufkettenrahmen (20) und dem Gleitwellenbauteil (26) angeordnet ist, wobei die Position der Pufferanschläge (29, 30) eine nach oben gerichtete vertikale Bewegung der mittleren Laufkettenrahmen (21, 20), nicht jedoch eine nach unten gerichtete vertikale Bewegung ermöglicht.

7. Laufketten- und Aufhängungssystem nach einem der vorhergehenden Ansprüche, **dadurch gekennzeichnet, daß** das Fahrzeug einen Luftkompressor und einen Speichertank zur Lieferung von Druckluft an die Luftfedern (14, 16) aufweist.

8. Laufketten- und Aufhängungssystem nach einem der vorhergehenden Ansprüche, **dadurch gekennzeichnet, daß** das Antriebsrad (3) oberhalb der vorderen und hinteren Laufräder (5, 4) angeordnet ist.

## Revendications

1. Système de suspension et de chenille (1) en élastomère, à entraînement direct, destiné à un véhicule agricole, comprenant :
- une chenille en caoutchouc sans fin (2) encerclant une roue motrice (3), une roue folle avant (5) et une roue folle arrière (4) ;
- un essieu arrière (11) et un essieu avant (12) supportant le véhicule ;
- une structure de train portante (10) fixée à l'essieu arrière (11) et à l'essieu avant (12), de manière à pivoter ; la structure (10) comprenant :
- un bras de suspension arrière (13) attelé à l'essieu arrière (11) de manière à pivoter et ayant sa roue folle arrière (4) fixée à l'une de ses extrémités, de manière à pivoter ;
- un bras de suspension avant (15) attelé à l'essieu avant (12) de manière à pivoter et ayant sa roue folle avant (5) fixée à l'une de ses extrémités, de manière à pivoter ;
**caractérisé en ce que** ladite structure (10) comprend également :
- une poutre de chenille centrale arrière (20) supportant des roues à galets (8, 9) et fixée, de manière à pivoter, à une extrémité au bras de suspension arrière (13) ;
- une poutre de chenille centrale avant (21) supportant des roues à galets (6, 7) et fixée de manière à pivoter, à une extrémité au bras de suspension avant (15);
- un premier et un deuxième ressorts pneumatiques (16, 14) fixés respectivement au bras de suspension avant et arrière (15, 13), à leur extrémité distale opposée à la position des roues folles avant et arrière respectivement (5,4) ; lesdits ressorts pneumatiques (16, 14) engageant respectivement lesdites poutres de chenille centrales avant et arrière (21, 20) à leur autre extrémité.

2. Système de suspension et de chenille selon la revendication 1, **caractérisé en ce que** lesdits bras de suspension avant et arrière (15, 13) possèdent une forme coudée, supportant respectivement une roue folle (5, 4), à une extrémité distale et un ressort pneumatique (16, 14), à une autre extrémité distale.

3. Système de suspension et de chenille selon la revendication 1 ou 2, **caractérisé en ce que**
- ladite poutre de chenille centrale avant (21) est reliée au bras de suspension avant (15) par un pivot (23) situé entre ledit essieu avant (12) et la roue folle avant (5) ;
- ladite poutre de chenille centrale arrière (20) est reliée au bras de suspension arrière (13) par un pivot (22) situé entre ledit essieu arrière (11) et la roue folle arrière (4).

4. Système de suspension et de chenille selon l'une des revendications qui précèdent, **caractérisé en ce que** ladite structure de train porteur (10) comprend également :
- une poutrelle de transition (24) reliée à la poutre de chenille centrale avant (21), de manière à pivoter ;
- un élément d'arbre coulissant (26) fixé à la poutrelle de transition (24) et relié à la poutre de chenille centrale arrière (20), de manière à pivoter.

5. Système de suspension et de chenille selon l'une des revendications qui précèdent, **caractérisé en ce que** un cylindre tendeur de chenille (19) est fixé au bras de suspension avant (15).

6. Système de suspension et de chenille selon la revendication 4, **caractérisé en ce que** la structure du train porteur (10) comprend également un premier arrêt de butée (29), disposé entre la poutre de chenille centrale avant (21) et la poutrelle de transition (24) et un deuxième arrêt de butée (30) disposé entre la poutre de chenille centrale arrière (20) et l'élément d'arbre coulissant (26), dans lequel la position des arrêts de butée (29, 30) permet le mouvement vertical ascendant des poutres de chenille centrales (21, 20), mais pas leur mouvement vertical descendant.

7. Système de suspension et de chenille selon l'une quelconque des revendications qui précèdent, **caractérisé en ce que** ledit véhicule possède un compresseur d'air et un réservoir d'alimentation pour la fourniture d'air comprimé aux ressorts pneumatiques (14, 16).

8. Système de suspension et de chenille selon l'une . quelconque des revendications qui précèdent, **caractérisé en ce que** la roue motrice (3) est' positionnée au-dessus des roues folles avant et arrière (5, 4).
